# EUROPEAN PATENT APPLICATION

(11) **EP 2 645 757 A1**
(43) Date of publication of application: **02.10.2013**
(21) Application number: 10859591.9
(22) Date of filing: 13.12.2010
(51) Int. Cl.: H04W 8/18, H04W 4/14, G09F 19/00

(54) **METHOD FOR DISPLAYING AN ADVERTISEMENT AND SYSTEM FOR IMPLEMENTING SAME**

(30) Priority: 10.11.2010 RU 2010145863; 10.11.2010 RU 2010145950
(71) Applicant: Limited Liability Company "Eyeline Communications CIS", Novosibirsk 630055 (RU)
(72) Inventor: GUMIROV, Vitaliy Shamilovich, Novosibirsk 630058 (RU); MATYUKOV, Petr Yurievich, Berdsk 633000 (RU)
(74) Representative: Bucher, Ralf Christian
(86) International application number: PCT/RU2010/000747
(87) International publication number: WO 2012/064214

(57) **Abstract**

The invention relates to a method for distributing advertising messages in a cellular network. The technical result consists in the possibility of sending a message to a user which combines balance information and advertising information. Use is made of a GSM73G cellular communication network, advertising message information, messages with a user's balance information, and a system which takes requests from users for receipt of balance information using the USSD protocol and combines balance information and an advertising message in a single resulting message which is sent to the user. In order to select the advertising message, an algorithm which takes into consideration the requirements of the advertiser and the advertiser's advertisement campaign is additionally determined, and a system controlling the selection of the advertising message on the basis of the algorithm which takes into consideration the requirements of the advertiser and the advertiser's advertisement campaign is used.

## Description

The invention relates to methods and systems for providing services used in cellular communications, in particular, to methods and systems enabling the operator of a GSM/3G cellular network to insert an advertisement in a message containing information about the balance in the user's account and select the advertisement with consideration for the user's profile details and the advertiser's requirements, and also to provide advertisers with a promotional channel with a high degree of personalization of advertising messages and, as a result, a high level of response to the advertisements.

Mobile network operators provide a multitude of free services under pressure of either legal constraints (for example, information about the balance in the user's account must be provided free in some countries, including the Russian Federation under its Communications Law), or the operators' desire to build user loyalty. To provide these services, though, operators have to make significant investments and incur operation costs (traffic payment, premises rentals, technical support, and so on). As a free service, a request for information about the balance using the USSD protocol (USSD is a standardized method for requesting for additional services in mobile networks, 3GPP TS 22.090, ETSI TS 123 090, ETSI TS 124 090) that allows a USSD session to be initiated, generates significant traffic, and is very popular with users.

The efficiency of advertising on TV, the radio, the Internet, and other media channels is commonly measured by the percentage of response (or the percentage of users who saw the advertising message and have responded to it in a predictable manner). To increase the efficiency of advertising in this sense, use is made of the so-called targeting to show the advertising message to viewers who will, with a large measure of probability, respond to the message.

To sell the promotional channel profitably to advertisers, operators must be capable of personalizing advertisements, that is, delivering advertising messages to users with consideration for their age, gender, interests, and other details, because advertisers want, and are ready, to pay for response to advertisements, rather than just for the opportunity to deliver their advertisements to whoever.

A prior art method for delivering advertising information messages uses a system for generating advertising messages for delivery (Patent RU 2192049, IPC G09F 19/00, priority of December 26, 2001, published on October 27, 2002).

The prior art method is deficient because advertising information messages are delivered to users at random without giving consideration to their personal details (age, gender, interests, location, and so on) and may be delivered to a user at a time when he/she is not ready to respond to the advertising message. Besides, the user may have more interest in a bonus to be given to him/her for receiving an advertising message than in the content of the message, a further reason that lowers the percentage of response to the advertisement.

Another prior art method and system for delivering advertisements to mobile devices allow an advertisement to be inserted in a USSD message sent back in response to a request for the user's balance (Application WO/2007/134689, IPC G06Q 30/00, priority of May 18, 2006, published on November 29, 2007).

The prior art method and system are deficient because USSD Phase 2 is used to perform them, in which case the USSD session is not broken off by the USSD center, the system goes over to the waiting mode in expectation of a response from the user, and resources are allocated for this session in the MSC (Mobile Switching Center) and in the operator's radio subsystem. Since a balance request generates a significant volume of sessions in the operator's network (this is the largest service from the viewpoint of the number of messages for operators in the Russian Federation), this approach puts a significant load on the network that would not yield any income to the operator. Still worse, this approach may even cause earnings from the operator's core services, such as voice and SMS, to fall because the MSC and radio subsystem resources drawn on for advertising sessions would interfere with the delivery of new SMS and with the sending and receipt of voice calls (voice calls, SMS, and USSD use the same resources in the common signal channel 7 (CSC-7) and the GSM/3G radio subsystem, and also the MSC). CSC-7 is a standardized ITU (International Telecommunication Union) signal system connecting elements of digital telecommunications networks.

In still another invention, an advertising message is sent together with information about the prepaid user's balance information immediately upon completion of a call made on a user's mobile phone, which has been chosen as immediate prior art of this invention (U.S. Application No. 20090280772, IPC H04M11/00, priority of May 6, 2008, published on November 12, 2009). Prepaid users are users provided with services on the prepayment principle and the principal of real time payment for the services rendered.

The prior art invention is deficient because advertising messages can only be delivered to prepaid users, and the operator has to install and tune up an IN (Intelligent Network) platform in his network to carry out the invention. The IN platform is extra equipment in a cellular communication operator's network that is used, among other purposes, for billing in real time.

Furthermore, a user accustomed to receive information about his balance upon completion of a call may ignore some of such messages when the information they contain is of no interest to him/her. He/she may also miss an advertising message that might interest him/her.

It is an object of the claimed invention to develop a method for delivering advertisements and a system for carrying it out to send a resulting message to the user, combining information about the balance in the user's account and an advertising message selected with consideration for the user's personal details (age, gender, interests, location, and so on) and using an algorithm with consideration for the interests of the advertiser and his advertising campaign. They also allow a novel promotional method to be added, service traffic related to the advertisements delivered increased, and the percentage of the users' response to the advertisements raised by personalizing the advertising messages delivered.

The object of this invention is achieved in a method for delivering advertisements, which comprises using GSM/3G cellular communication networks, information about the user's profile, and an advertising message selected in accordance with the user's profile or his/her telephone number, and also a message containing information about the balance in the user's account such that an advertising method is selected according to an algorithm taking the requirements of the advertiser and his advertising campaign into consideration, and use is made of a system taking requests for information about the users' balance using the USSD protocol, said system controlling selection of an advertising message according to an algorithm the consideration for the requirements of the advertiser and his advertising campaign and combining information about the balance and the advertising message in a single resulting message

that is sent to the user. The resulting message is sent to the user as a USSD or SMS message. SMS is used for delivering the resulting message, if its length exceeds the length of USSD messages accepted in a given mobile network, or in the event of a delivery error message received from the CSC-7 signal network. The user's profile may include information about the user's current location received through the operator's additional equipment, for example, an LBS (Location Based Service) system, or the basic equipment with an accuracy of up to VLR, where the user is registered at the moment, VLR (Visitors Location Register) being a temporary database of subscribers who are within the range of a certain MSC/VLR. Also, information about the user's balance, the advertising message, and details of the user's profile are received through either TCP/IP networks, wherein TCP/IP (Transmission Control Protocol/Internet Protocol) is a set of protocols to transmit data through data transmission networks developed by the IETF (Internet Engineering Task Force) and described in the RFC 793 (for TCP) and RFC 791 (for IP) standards, or through the CSC-7 standard networks, and information about the user's balance and the advertising message are received asynchronously.

The system for delivering advertisements in accordance with the claimed method comprises a resulting message forming device connected to the infrastructure of GSM/3G cellular communication networks, said device being connected to an advertisement selection device connected to a database of user profiles, said resulting message forming device receiving requests for balance information from users using the USSD protocol, said resulting message forming device further receiving information about a user's balance from the infrastructure of cellular communication networks through TCP/IP and/or CSC-7 networks and an advertising message from the advertisement selection device through TCP/IP and/or CSC-7 networks, and also combining the balance information and advertising message in a single resulting message and sending said resulting message to the user, and the advertisement selection device receiving information about the user's profile from the user profile database device through TCP/IP and/or CSC-7 networks and controlling selection of an advertising message with consideration for the user's profile and according to an algorithm taking the advertiser's requirements and the requirements of his advertising campaign into consideration. Furthermore, the resulting message forming device sends the resulting message using either the USSD protocol or the SMS protocol.

The technical effect of the claimed invention consists in increasing the cellular communication operator's traffic in services related to the delivery of advertisements, simplifying, and reducing the costs of, addition of advertising messages in his network because implementation of the claimed method does not require him to purchase, install, and additionally tune up any specialized equipment such as an IN platform. The claimed invention enables the operator to use and offer an efficient channel to advertisers for promoting their goods and services with a high degree of personalization of advertising messages. As a result of personalization, the users' response to advertisements increases at least tenfold, on average, compared to advertisements delivered as a result of random selection of advertising messages.

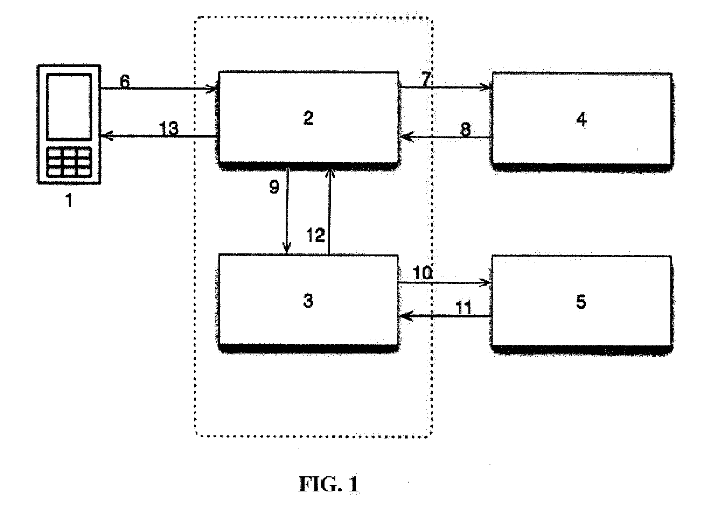

FIG. 1 is a block diagram illustrating operation of the claimed system and implementation of the claimed method, wherein 1 is a user's mobile telephone; 2 is a resulting message forming device; 3 is an advertisement selection device; 4 is a billing device of the operator's cellular communication infrastructure; 5 is the users' profile database device; 6 is a user's USSD request for his/her balance on his/her mobile telephone; 7 is a user's request for his/her balance to the cellular communication operator's billing device 4 in an asynchronous mode through TCP/IP and/or CSC-7 networks; 8 is information about the user's balance from the cellular communication operator's billing device 4 delivered through TCP/IP and/or CSC-7 networks; 9 is a request for an advertising message addressed to advertisement selection device 3 through TCP/IP and/or CSC-7 networks with an instruction to select and personalize an advertising message for the user concerned; 10 is a request for the user's profile details to be retrieved from users' profile database device 5 through TCP/IP and/or CSC-7 networks; 11 is information containing the user's profile details delivered through TCP/IP and/or CSC-7 networks; 12 is an advertising message selected according to the specified algorithm with consideration for the profile details and requirements of the advertiser and his advertising campaign; and 13 is the resulting message containing information about the user's balance and the advertisement selected according to a specified algorithm with consideration for the user's profile details and requirements of the advertiser and his advertising campaign and delivered as USSD or SMS.

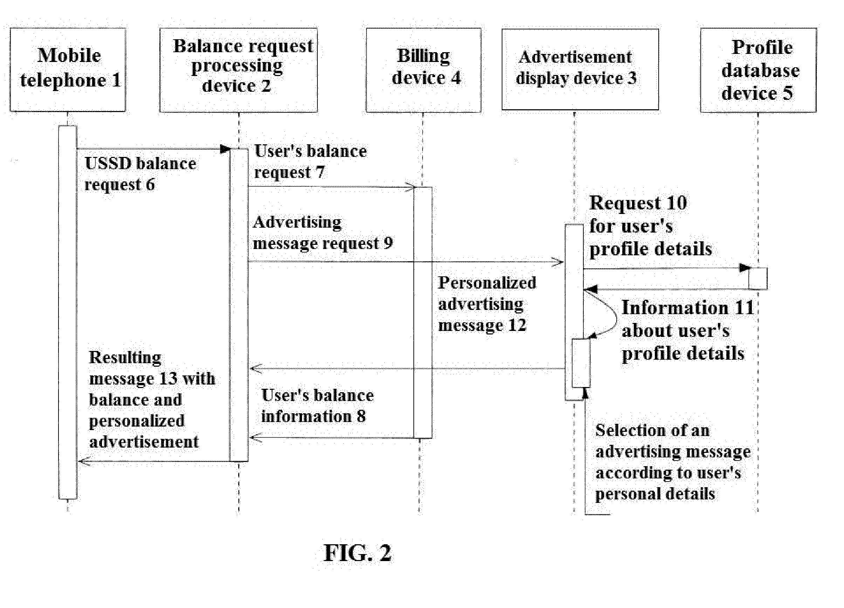

FIG. 2 is a timing diagram illustrating the manner in which the claimed method is carried out.

The claimed method is performed in a system comprising a resulting message forming device 2, interacting with the cellular communication operator's billing device 4, and an advertisement selection device 3 interacting with the users' profile database device 5.

Performance of the claimed method using the claimed system begins with preparation of a list of advertising messages in advertisement selection device 3 and determination of an algorithm for selecting advertising messages for specific details of a user's profile in accordance with the requirements of the advertiser and his advertising campaign. FIG. 2 shows a timing diagram for the performance of the claimed method. At the time when a user addresses the system with a USSD balance request 6, resulting message forming device 2 retrieves the user's unique telephone number, MSISDN (Mobile Station Integrated Services Digital Number matching the SIM card) in the GSM/3G system intended for making and receiving calls from the address information and sends the user's balance request 7, including MSISDN in coded form, to the cellular communication operator's billing device 4 in an asynchronous mode through TCP/IP and/or CSC-7 networks. Next, resulting message forming device 2 sends a request 9 for receipt of an advertising message containing MSISDN in coded form to advertisement selection device 3 in an asynchronous mode through TCP/IP and/or CSC-7 networks with an instruction for selecting a message with consideration for the user's profile details in accordance with the preselected algorithm taking account of the requirements of the advertiser and his advertising campaign. Whereupon the memory register values are changed in resulting message forming device 2 such that the device goes over to a waiting mode awaiting response signals from the other devices. The cellular communication operator's billing device 4 sends information 8 about the user's balance to resulting message forming device 2 through TCP/IP and/or CSC-7 networks. Advertisement selection device 3 sends a request 10 for receipt of the user's profile details to the users' profile database device 5 by sending a signal through TCP/IP and/or CSC-7 networks with the user's coded MSISDN value and upon receipt of information 11 with the user's profile details

selects an advertising message for the user in accordance with a specified algorithm giving consideration to the user's details and the requirements of the advertiser and his advertising campaign, whereupon it sends the selected advertising message 12 in coded form through the TCP/IP and/or CSC-7 networks to resulting message forming device 2. Upon receipt of information 8 about the user's balance from the cellular communication operator's billing device 4 and advertising message 12 from advertisement forming device 3, resulting message forming device 2 generates resulting message 13 and sends it to the user as a USSD or SMS message.

The claimed method and system for performing the same are advantageous because the claimed device and system enable operators to obtain an efficient channel for promoting their services and increase their traffic in services related to advertisements delivered without replacing or adapting their existing network infrastructure. The claimed invention also enables the operator to offer advertisers this promotional channel with a high measure of personalization of advertising messages that increases significantly the response to advertising messages in comparison with ordinary advertisements delivered at random. From the users' viewpoint, this promotional channel is a much smaller irritation than ordinary impersonalized advertisements because users do not receive messages unexpectedly when they have their cellphones in their pockets, but together with balance information they request at a time when they have their cellphones in hand and expect a message to come through, the advertising information being personalized and delivered with consideration for a particular user's interests.

### Example 1.

A service for mobile telephone users with a broad target audience was advertised through an Internet site. The response to the advertisement was not above 5%. When information about the service was inserted in the resulting message sent in response to a balance request, the response to the advertisement was over 50%.

### Example 2.

The claimed method was used to advertise a cellular communication operator's travel-related service to a relatively small target audience compared to the total number of the cellular communication operator's users. Initially, advertisements were inserted in

a resulting message sent in response to any balance request, without consideration for users' profiles. There was a 0.3% response to the advertising messages. Then, an algorithm was used to determine the user's measure of interest and his/her profile details, and the advertising message was inserted in the resulting message in response to balance requests from users whose profile details suggested, with a large measure of certainty, that they could be interested in the service advertised. The response to the advertising message rose to 4%.

## Claims

1. A method for displaying an advertisement comprising GSM/3G cellular communication networks, information about a user's profile, and an advertising message selected in accordance with the user's profile or his/her telephone number, and a message containing information about the user's balance, wherein selection of an advertising message is preceded by determination of an algorithm giving consideration to the requirements of the advertiser and his advertising campaign and a system receiving requests for balance information from users according to the USSD protocol is used to control selection of an advertising message according to the algorithm giving consideration to the requirements of the advertiser and his advertising campaign and to combine the balance information and advertising message in a single resulting message sent to the user.

2. A method of claim 1, wherein the resulting message is sent to the user as a USSD or SMS message.

3. A method of claim 2, wherein SMS is used to send the resulting message if the length thereof is in excess of the length accepted for the length of USSD messages in a particular mobile network.

4. A method of claim 2, wherein SMS is used to send the resulting message upon receipt of a signal of a delivery error from a CSC-7 signal network.

5. A method of claim 1, wherein the user's profile may include information about the user's current location received from an LBS system.

6. A method of claim 1, wherein the user's profile may include information about the user's current location with an accuracy of up to VLR where he/she is registered at the time.

7. A method of claim 1, wherein information about the user's balance is received through TCP/IP networks.

8. A method of claim 1, wherein an advertising message is received through TCP/IP networks.

9. A method of claim 1, wherein the user's profile details are received through TCP/IP networks.

10. A method of claim 1, wherein information about the user's balance is received through CSC-7 networks.

11. A method of claim 1, wherein an advertising message is received through CSC-7 networks.

12. A method of claim 1, wherein the user's profile details are received through CSC-7 networks.

13. A method of claim 1, wherein information about the user's balance and an advertising message are received in an asynchronous mode.

14. A system for delivering advertisements by the method of claim 1, comprising a resulting message forming device, connected to the infrastructure of GSM/3 cellular communication networks, and an advertisement selection device connected to the resulting message forming device and to the users' profile database, the resulting message forming device receiving requests for information about users' profiles using the USSD protocol, information about a user's profile from the infrastructure of GSM/3 cellular communication networks, and an advertising message from the advertisement selection device, and also combining the balance information and advertising message in a single resulting message and sending said resulting message to the user, and the advertisement selection device receiving information about the user's profile from the users' profile database device and controlling selection of an advertising message with consideration for the user's profile and according to an algorithms giving consideration to the requirements of the advertiser and his advertising campaign.

15. A system of claim 14, wherein information about the user's profile is received through TCP/IP networks.

16. A system of claim 14, wherein information about the user's balance is received through CSC-7 networks.

17. A system of claim 14, wherein an advertising message is received through TCP/IP networks.

18. A system of claim 14, wherein an advertising message is received through CSC-7 networks.

19. A system of claim 14, wherein the resulting message forming device delivers the resulting message according to the USSD protocol.

20. A system of claim 14, wherein the resulting message forming device delivers the resulting message according to the SMS protocol.

21. A system of claim 14, wherein information about the user's profile is received through TCP/IP networks.

22. A system of claim 14, wherein information about the user's profile is received through CSC-7 networks.
